# EUROPEAN PATENT APPLICATION

(11) **EP 1 667 123 A1**
(43) Date of publication of application: **07.06.2006**
(21) Application number: 04773015.5
(22) Date of filing: 13.09.2004
(51) Int. Cl.: G11B 7/0045, G11B 7/125

(54) **RECORDING CONDITION SETTING METHOD, RECORDING METHOD, RECORDING MEDIUM, AND OPTICAL DISC DEVICE**

(30) Priority: 16.09.2003 JP 2003322717
(71) Applicant: Ricoh Company, Ltd., Tokyo 143-8555 (JP)
(72) Inventor: MATSUI, Masakatsu, Yokohama-shi, Kanagawa 224-0061 (JP)
(74) Representative: Mounteney, Simon James
(86) International application number: PCT/JP2004/013333
(87) International publication number: WO 2005/029473

(57) **Abstract**

In a recording condition setting method, a plurality of setting values of record timing conditions are acquired for a number of group data conforming to a linear velocity of an optical disk, rotated by a constant angular velocity (CAV), at a record position on a recording surface where information is recorded (step 557). The plurality of setting values for the number of group data are set to the optical disk device one by one at the number of times (steps 559-567). Even if the recording speed is increased and the number of group data relevant to the record timing conditions are increased greatly when compared with a conventional disk device, the optimal record timing conditions can be always set up by using the same composition as the conventional disk device according to the recording condition setting method.

## Description

### TECHNICAL FIELD

The present invention generally relates to the recording condition setting method, the recording method, the recording medium, and the optical disk device. Specifically, the present invention relates to the recording condition setting method of setting up the record conditions when recording the information on the optical disk, the recording method in which a pulse of laser beam is generated and information is recorded on the optical disk, the recording medium in which the program for controlling the optical disk device is recorded, and the optical disk device which records the information on the optical disk.

### BACKGROUND ART

In recent years, the improvements of the functions of the personal computer have come to allow easy accessing of the AV (audio-visual) information, such as the music and the images. Since the amount of the AV information is very large, as an information recording medium storing the AV information, the optical disks, such as CD (compact disc) and DVD (digital versatile disc), come to attract the attention. With the low prices of the optical disks, the optical disk device as an information recording device has come to spread as one of the peripheral devices of the personal computer.

In the optical disk device, a pulse of the laser beam from the light source is generated and a small spot is formed on the recording surface of the optical disk in which the track in the spiral or concentric-circle shape is formed, so that the information is recorded or erased on the optical disk, or the information is reproduced from the optical disk based on the reflected light from the recording surface.

By the way, the information is recorded on the optical disk by using the respective lengths and the combination of a mark area and a space area where the reflection factors are different from each other.

Then, when the information is recorded on the optical disk, the power (luminescence power) of the laser beam which is outputted from the light source is controlled so that the mark area and the space area are formed in the predetermined position, respectively.

For example, in the case of the write-once optical disk which contains the organic dye in the recording surface, such as CD-R (CD-recordable), DVD-R (DVD-recordable), and DVD+R (DVD+recordable), when forming the mark area, the luminescence power is increased, the organic dye is heated and fused, and the disk substrate portion in contact with the dye is transformed or deformed. On the other hand, when forming the space area, the luminescence power is decreased to the same level as that of the time of reproduction, so that the disk substrate portion is not transformed or deformed. Thereby, the mark area has the reflection factor which is lower than that of the space area. The system of controlling the luminescence power in this manner is also called the single pulse recording mode.

Moreover, in the case of the rewritable type optical disk which contains the special alloy in the recording surface, such as CD-RW (CD-rewritable), DVD-RW (DVD-rewritable), DVD+RW (DVD+rewritable), etc., when forming the mark area, the special alloy is heated to the 1st temperature, and thereafter the special alloy is rapidly cooled into the amorphous state. On the other hand, when forming the space area, the special alloy is heated to the 2nd temperature (< the 1st temperature), and thereafter the special alloy is slowly cooled into the crystal state. Thereby, the mark area has the reflection factor which is lowed than that of the space area. The temperature control of the special alloy is performed by controlling the luminescence power of the laser beam.

In addition, in order to remove the influence of the accumulated heat, the method of dividing the pulse of the luminescence power for forming the mark area into the plurality of pulses (formation of the multiple pulses) is used. For example, see Japanese Laid-Open Patent Applications No. 10-106008, No. 11-232651, and No. 2001-229564. The system of controlling the luminescence power in this manner is also called the multi-pulse recording mode.

The maximum value of the luminescence power in the multiple pulses is also called the heating power (or the recording power), and the minimum value of the luminescence power in the multiple pulses is also called the cooling power. Moreover, the luminescence power when forming the space area is also called the erasing power (heating power > erasing power > cooling power).

The demands for further improvement in the recording speed are increasing as the use of the optical disk becomes common. As one of the means for increasing the recording speed, the technology in which the recording of the optical disk is performed while the optical disk is rotated by not the constant linear velocity (CLV) but the constant angular velocity (CAV) has been developed briskly. For example, see Japanese Laid-Open Patent Applications No. 09-326121, No. 2001-076341, No. 2001-110053, No. 2001-118245, No. 2001-243626, No. 2002-208139, and No. 2003-099927.

In the above-mentioned technology, the linear velocity increases when the portion of the optical disk concerned goes to the outer periphery of the optical disk. If the above-mentioned technology is used, the recording speed of CD up to the maximum of 60X (the reference linear velocity is 1.2 - 1.4 m/s) can be attained, and the recording speed of DVD up to the maximum of 16X (the reference linear velocity is 3.4 m/s) can be attained.

Generally, the optimal recording conditions for obtaining good recording quality vary depending on the linear velocity. For example, in the case of the method and device disclosed in Japanese Laid-Open Patent Application No. 2002-208139, the recording power is changed depending on the rate of change of the linear velocity.

However, if the recording speed is increased further in the near future, it is expected that the number of the items which must be set up as the recording conditions is increased further. In the methods and devices which are disclosed in Japanese Laid-Open Patent Applications No. 09-326121, No. 2001-076341, No. 2001-110053, No. 2001-118245, No. 2001-243626, No. 2002-208139, and No. 2003-099927, if the number of the items which must be set up as the recording conditions is increased, it is necessary to increase the capacity of the buffer memory for storing the recording conditions provided in the control circuit for determining the pulse form of the luminescence power, and in this connection, there is a possibility that the increase of the cost and the enlargement of the device arise.

### DISCLOSURE OF THE INVENTION

A general object of the present invention is to provide an improved recording condition setting method in which the above-mentioned problems are eliminated.

The first object of the present invention is to provide a recording condition setting method which enables high-speed recording with stable recording quality and can suppress the increase of the cost and the enlargement of the optical disk device.

The second object of the present invention is to provide a recording method which enables high-speed recording with stable recording quality and can suppress the increase of the cost and the enlargement of the optical disk device.

The third object of the present invention is to provide a recording medium which is embodied therein for causing a computer to execute the recording condition setting method which enables high-speed recording with stable recording quality and can suppress the increase of the cost and the enlargement of the optical disk device.

The fourth object of the present invention is to provide an optical disk device which enables high-speed recording with stable recording quality and can suppress the increase of the cost and the enlargement of the optical disk device.

In order to achieve the above-mentioned objects, the present invention provides a recording condition setting method which sets record timing conditions of an optical disk device when a laser beam pulse is created and information is recorded on a recording surface of an optical disk rotated by a constant angular velocity, the recording condition setting method comprising the steps of: acquiring a plurality of setting values of the record timing conditions for a number of group data conforming to a linear velocity of the optical disk at a record position on the recording surface where the information is recorded; and setting the plurality of setting values for the number of group data to the optical disk device one by one at the number of times.

According to the present invention, the plurality of setting values for the number of group data related to the record timing conditions conforming to the linear velocity at the record position on the recording surface of the optical disk rotated by the constant angular velocity (CAV) are acquired respectively (the acquiring step). And the plurality of setting values for the number of group data are set to the optical disk device one by one at the number of times (the setting step).

Similar to the case in which the information is recorded in the plurality of recording areas which are at different distances from the rotation center of the optical disk, if the linear velocity changes during the recording, the setting values of the record timing conditions conforming to the linear velocity are set to the optical disk device one by one at the number of times.

Therefore, even if the recording speed is increased and the number of group data related to the record timing conditions are increased greatly when compared with the conventional disk device, it is possible to always set up the optimal recording conditions by using the same composition as the conventional disk device.

Therefore, as a result, high-speed recording with stable recording quality can be realized, and the enlargement of the optical disk device and the increase of the cost can be suppressed.

The above-mentioned recording condition setting method may be configured so that the number of group data include parameters which specify a configuration of the laser beam pulse.

The above-mentioned recording condition setting method may be configured so that the parameters contain any of a pulse width of the laser beam pulse, a rise timing of the laser beam pulse, and a fall timing of the laser beam pulse.

The above-mentioned recording condition setting method may be configured so that the parameters contain the rise timing of the pulse and the fall timing of the pulse, and the setting step is configured so that the plurality of setting values for the number of group data are respectively set one by one with respect to each of the number of group data containing the rise timing and the fall timing.

The above-mentioned recording condition setting method may be configured so that a plurality of values each depending on a length of a mark area to be formed on the recording surface are acquired with respect to each of the number of group data, respectively.

The above-mentioned recording condition setting method may be configured so that each of the plurality of values for the number of group data is set to the optical disk device one by one with respect to each of a plurality of lengths of mark areas.

The above-mentioned recording condition setting method may be so that either a plurality of values each depending on a length of a space area immediately preceding a mark area to be formed on the recording surface or a plurality of values each depending on a length of a space area immediately following the mark area are acquired with respect to each of the number of group data, respectively.

The above-mentioned recording condition setting method may be configured so that each of the plurality of values for the number of group data is set to the optical disk device one by one with respect to each of a plurality of lengths of space areas.

The above-mentioned recording condition setting method may be configured so that at least one of the plurality of setting values for the number of group data is acquired based on a known relation formula which represents a relation between the linear velocity and the setting value.

The above-mentioned recording condition setting method may be configured so that at least one of the plurality of setting values for the number of group data is acquired from results of predetermined operations performed based on a plurality of sets of a known linear velocity and a known setting value.

The above-mentioned recording condition setting method may be configured so that the predetermined operations are either approximation computations or interpolation computations.

In order to achieve the above-mentioned objects, the present invention provides a recording method of recording information on a recording surface of an optical disk rotated by a constant angular velocity, by creating a laser beam pulse and using record timing conditions of an optical disk device, the recording method comprising the step of recording the information on the optical disk using the record timing conditions set up by the above-mentioned recording condition setting method.

According to the present invention, the setting values of the record timing conditions conforming to the linear velocity at the record position where the information is recorded on the optical disk are set up by the above-mentioned recording condition setting method, and, as a result, high-speed recording with stable recording quality can be realized, and the enlargement of the optical disk device and the increase of the cost can be suppressed.

In order to achieve the above-mentioned objects, the present invention provides a computer-readable recording medium embodied therein for causing a computer of an optical disk device to execute a recording condition setting method, wherein the optical disk device records information on a recording surface of an optical disk rotated by a constant angular velocity, and the recording condition setting method sets record timing conditions of the optical disk device when a laser beam pulse is created and the information is recorded on the optical disk, the recording condition setting method comprising the steps of: acquiring a plurality of setting values of the record timing conditions for a number of group data conforming to a linear velocity of the optical disk at a record position on the recording surface where the information is recorded; and setting the plurality of setting values for the number of group data to the optical disk device one by one at the number of times.

According to the present invention, the plurality of setting values for the number of group data related to the record timing conditions conforming to the linear velocity at the record position on the recording surface of the optical disk rotated by the constant angular velocity (CAV) are acquired respectively. And the plurality of setting values for the number of group data are set to the optical disk device one by one at the number of times. Therefore, as a result, high-speed recording with stable recording quality can be realized, and the enlargement of the optical disk device and the increase of the cost can be suppressed.

In order to achieve the above-mentioned objects, the present invention provides an optical disk device which records information on an optical disk, the optical disk device comprising : a linear-velocity acquiring unit acquiring a linear velocity of the optical disk at a record position on a recording surface of the optical disk which is rotated by a constant angular velocity; a setting-value acquiring unit acquiring a plurality of setting values of record timing conditions for a number of group data, respectively, by retrieving one of a plurality of setting values, which are obtained beforehand for every linear velocity for the number of group data, based on the linear velocity acquired by the linear-velocity acquisition unit; a setting unit setting the plurality of setting values for the number of group data to the optical disk device one by one at the number of times; and a recording unit recording the information on the optical disk using each of the plurality of setting values set by the setting unit.

According to the present invention, the plurality of setting values for the number of group data related to the record timing conditions conforming to the linear velocity at the record position on the recording surface of the optical disk rotated by the constant angular velocity (CAV) are acquired respectively. And the plurality of setting values for the number of group data are set to the optical disk device one by one at the number of times. Therefore, as a result, high-speed recording with stable recording quality can be realized, and the enlargement of the optical disk device and the increase of the cost can be suppressed.

The above-mentioned optical disk device may be configured so that the optical disk is a rewritable optical disk.

The above-mentioned optical disk device may be configured so that the rewritable optical disk is in conformity with any of specifications of CD-RW, DVD-RW and DVD+RW.

Other objects, features and advantages of the present invention will be apparent from the following detailed description when reading in conjunction with the accompanying drawings.

### BRIEF DESCRIPTION OF THE DRAWINGS

FIG. 1 is a block diagram showing the composition of the optical disk device in the preferred embodiment of the invention.
FIG. 2 is a diagram for explaining the composition of the optical pickup device in the optical disk device of FIG. 1.
FIG. 3 is a block diagram showing the composition of the read-signal processing circuit in the optical disk device of FIG. 1.
FIG. 4 is a block diagram showing the composition of the clock signal creation circuit in the read-signal processing circuit of FIG. 3.
FIG. 5 is a block diagram for explaining the composition of the SP controller in the optical disk device of FIG. 1.
FIG. 6 is a signal waveform diagram for explaining the strategy information of the 1T record strategy.
FIG. 7 is a signal waveform diagram for explaining the strategy information of the 2T record strategy.
FIG. 8 is a diagram for explaining the table data.
FIG. 9 is a diagram for explaining the pulse form of the Type 1 corresponding to the mark area of 3T.
FIG. 10 is a diagram for explaining the pulse form of the Type 1 corresponding to the mark area of 5T.
FIG. 11 is a diagram for explaining the pulse form of the Type 2 corresponding to the mark area of 3T.
FIG. 12 is a diagram for explaining the pulse form of the Type 2 corresponding to the mark area of 5T.
FIG. 13 is a block diagram showing the composition of the encoder in the optical disk device of FIG. 1.
FIG. 14 is a block diagram showing the composition of the laser control circuit in the optical disk device of FIG. 1.
FIG. 15 is a flowchart for explaining the record processing which is performed by the optical disk device according to the record request command from the host computer computer.
FIG. 16 is a flowchart for explaining the record processing which is performed by the optical disk device according to the record request command from the host computer computer.
FIG. 17 is a flowchart for explaining the reproduction processing which is performed by the optical disk device performed according to the reproduction request command from the host computer computer.
FIG. 18 is a diagram for explaining an example of the relation between the trigger value and the linear velocity.

### DESCRIPTION OF REFERENCE NUMERALS

15 optical disk
20 optical disk device
23 optical pickup device (a part of recording unit)
24 laser control circuit (a part of recording unit)
25 encoder (a part of recording unit)
39 flash memory (recording medium)
40 CPU (linear-velocity acquisition unit, setting value determination unit, setting unit, and a part of recording unit)

### BEST MODE FOR CARRYING OUT THE INVENTION

A description will now be given of the preferred embodiments of the invention with reference to the accompanying drawings.

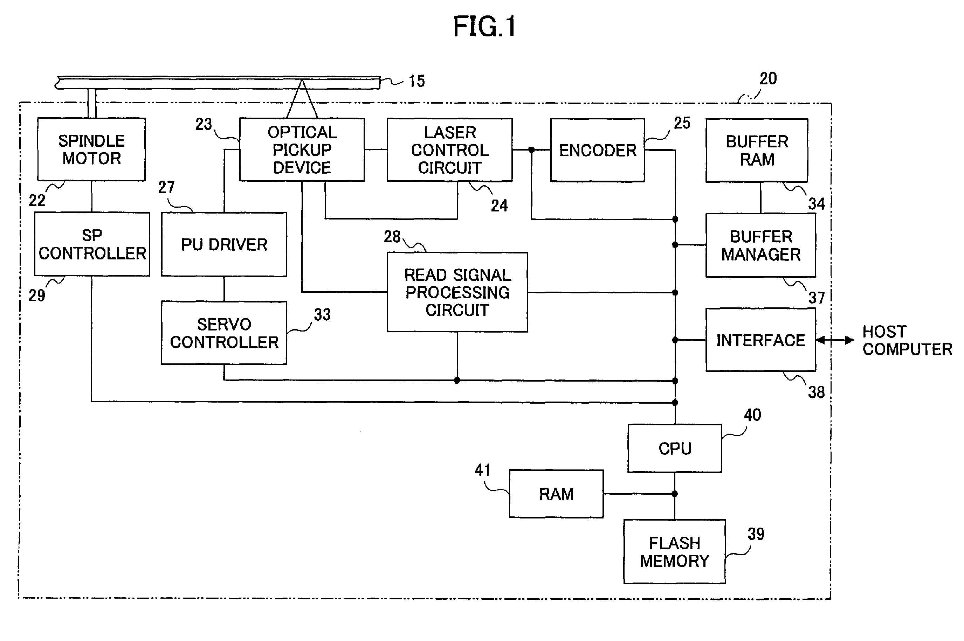

FIG. 1 shows the composition of the optical disk device 20 in the preferred embodiment of the invention.

The optical disk device 20 shown in FIG. 1 comprises the spindle motor 22 for driving the rotation of the optical disk 15, the optical pickup device 23, the laser control circuit 24, the encoder 25, the PU driver 27, the read-signal processing circuit 28, the SP controller 29, the servo controller 33, the buffer RAM 34, the buffer manager 37, the interface 38, the flash memory 39, the CPU 40, and the RAM 41.

In addition, the connection line in FIG. 1 merely indicates the flow of a typical signal or information but does not indicate the physical connection between the blocks concerned.

In the present embodiment, the information recording medium in conformity with the DVD standard specifications is used as the optical disk 15 as a typical example. Moreover, the user data is recorded on the optical disk in accordance with the multi-pulse recording mode. Furthermore, the recording is performed by the constant angular velocity (CAV) method.

The interface 38 is the bidirectional communication interface between the optical disk device and the host computer (for example, personal computer). For example, the interface 38 is in conformity with the specifications of ATAPI (AT Attachment Packet Interface).

The buffer RAM 34 has the buffer region where the data (the recording data) to be recorded on the optical disk 15 and the data (the reproduction data) reproduced from the optical disk 15 are stored temporarily, and the variable area in which the various program variables etc. are stored.

The buffer manager 37 manages the inputs and outputs (I/O) of the data to the buffer RAM 34. And if the amount of the data accumulated in the buffer region of the buffer RAM 34 reaches the predetermined amount, such information is notified to the CPU 40.

The optical pickup device 23 is the device for irradiating the laser beam to the recording surface of the optical disk 15 in which the track in the spiral or concentric-circle shape is formed, and for receiving the reflected light from the recording surface of the optical disk 15.

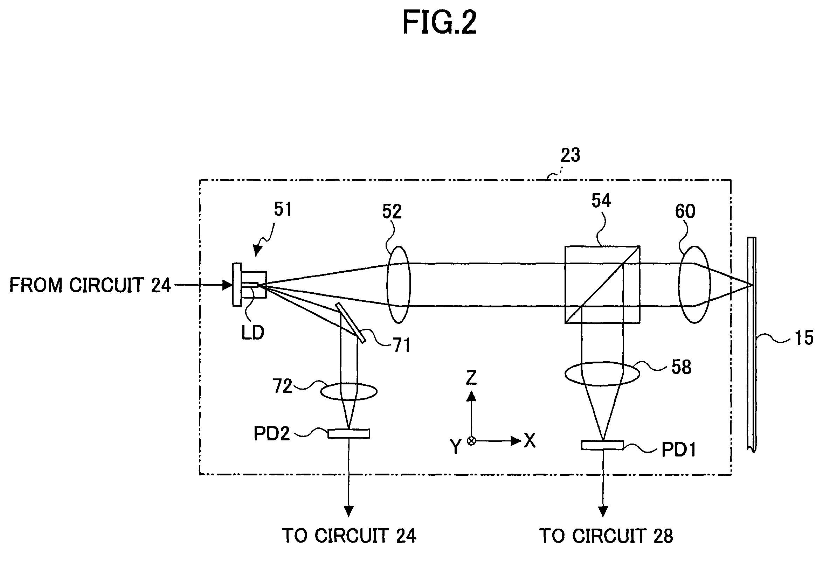

For example, the optical pickup device 23 comprises the light-source unit 51, the collimator lens 52, the beam splitter 54, the objective lens 60, the two detection lens 58 and 72, the two photodetectors PD1 and PD2, the reflection mirror 71, and the drive system (the focusing actuator, the tracking actuator, and the seeking motor, all of which are not illustrated), as shown in FIG. 2.

The light-source unit 51 comprises the semiconductor laser LD as a light source which emits the laser beam the wavelength of which is 660nm. In addition, the direction in which the laser beam with the maximum intensity is outputted by the light-source unit 51 in the present embodiment is the direction of +X.

The collimator lens 52 is arranged at the +X side of the light-source unit 51, and converts the light beam, which is outputted by the light-source unit 51, into the generally parallel light beam. The reflection mirror 71 is arranged near the collimator lens 52, and reflects a part of the light beam outputted by the light-source unit 51 in the direction of -Z as the monitoring light beam.

The beam splitter 54 is arranged at the +X side of the collimator lens 52, makes the light beam from the collimator lens 52 penetrate as it is, and branches the light beam (the return light beam) reflected by the recording surface of the optical disk 15 in the direction of -Z.

The objective lens 60 is arranged at the +X side of the beam splitter 54, and focuses the light beam passing through the beam splitter 54 onto the recording surface of the optical disk 15.

The detection lens 58 is arranged at the -Z side of the beam splitter 54, and focuses the return light beam which is branched in the direction of -Z by the beam splitter 54, onto the light receiving surface of the photodetector PD1.

The photodetector PD1 comprises the plurality of photo detecting elements which output the signals containing the wobble-signal information, the reproduction data information, the focusing error information, the tracking error information, etc. similar to the normal optical disk device.

Each of the plurality of photo detecting elements creates the current signal in proportion with the amount of the received light though the photoelectric conversion, respectively, and outputs the signal to the read-signal processing circuit 28.

The detection lens 72 is arranged at the -Z side of the reflection mirror 71, and focuses the monitoring light beam, reflected in the direction of -Z by the reflection mirror 71, onto the received light surface of the photodetector PD2. The normal photodetector is used as the photodetector PD2. The photodetector PD2 creates the current signal in proportion with the amount of the received light by the photoelectric conversion, and outputs it to the laser control circuit 24 as a power monitor signal.

The focusing actuator (not illustrated) is the actuator for carrying out the very small drive of the objective lens 60 in the direction of the focus (X-axis direction) which is the direction of the optical axis of the objective lens 60.

The tracking actuator (not illustrated) is the actuator for carrying out the very small drive of the objective lens 60 at the tracking direction (Z-axis direction) which is the direction which intersects perpendicularly in the tangential direction of the track.

The seeking motor (not illustrated) is the motor for driving the optical pickup device itself in the tracking direction (Z-axis direction).

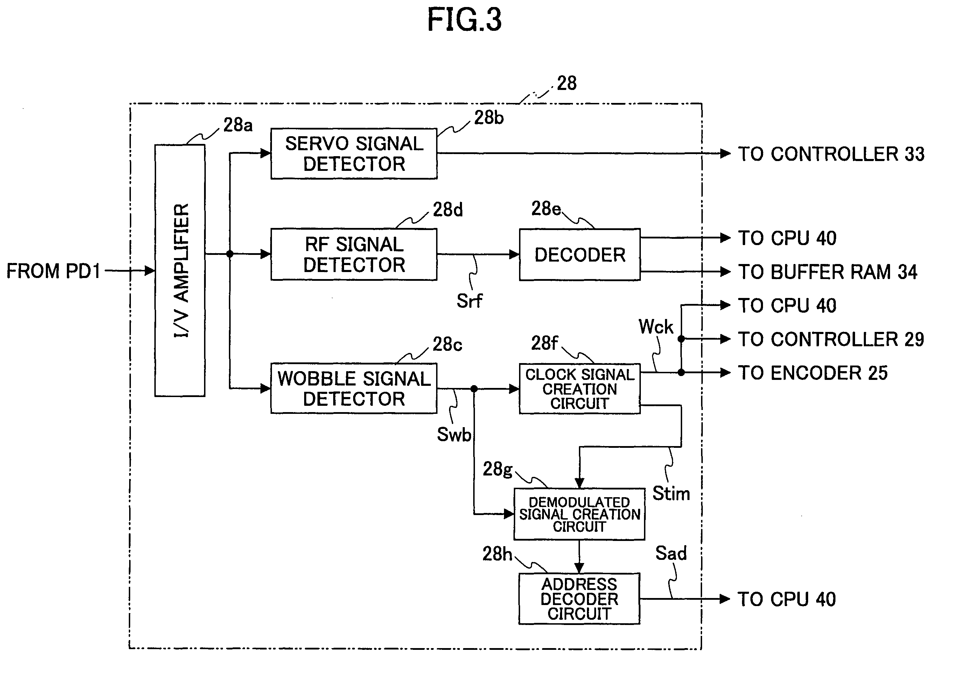

The read-signal processing circuit 28 comprises the I/V amplifier 28a, the servo-signal detector 28b, the wobble-signal detector 28c, the RF signal detector 28d, the decoder 28e, the clock signal creation circuit 28f, the demodulated signal creation circuit 28g, and the address decoder circuit 28h, as shown in FIG. 3.

In addition, the arrow in FIG. 3 merely indicates the typical signal flow or data flow but does not indicate the connection between two of the respective elements of the read-signal processing circuit 28.

The I/V amplifier 28a transforms the current signal from the photodetector PD 1 into the voltage signal, and amplifies the voltage signal with the predetermined gain. The servo-signal detector 28b detects the servo signals (the focusing error signal, the tracking error signal, etc.) based on the output of the I/V amplifier 28a. The servo signals detected by the servo-signal detector 28b are outputted to the servo controller 33.

The wobble-signal detector 28c detects the wobble signal (referred to as Swb) based on the output of the I/V amplifier 28a. The wobble signal Swb detected is outputted to both the clock signal creation circuit 28f and the demodulated signal creation circuit 28g.

The RF signal detector 28d detects the RF signal (referred to as Srf) based on the output of the I/V amplifier 28a. The RF signal Srf detected is outputted to the decoder 28e. The decoder 28e performs the decode processing, the error-detection processing, etc. for the RF signal Srf. When an error is detected, the decoder 28e performs the error correction processing, and stores, after the error correction processing is performed for the RF signal Srf, the error-corrected signal in the buffer RAM 34 through the buffer manager 37 as the reproduction data.

In addition, the address data is contained in the RF signal, and the decoder 28e extracts the address data from the RF signal and outputs it to the CPU 40.

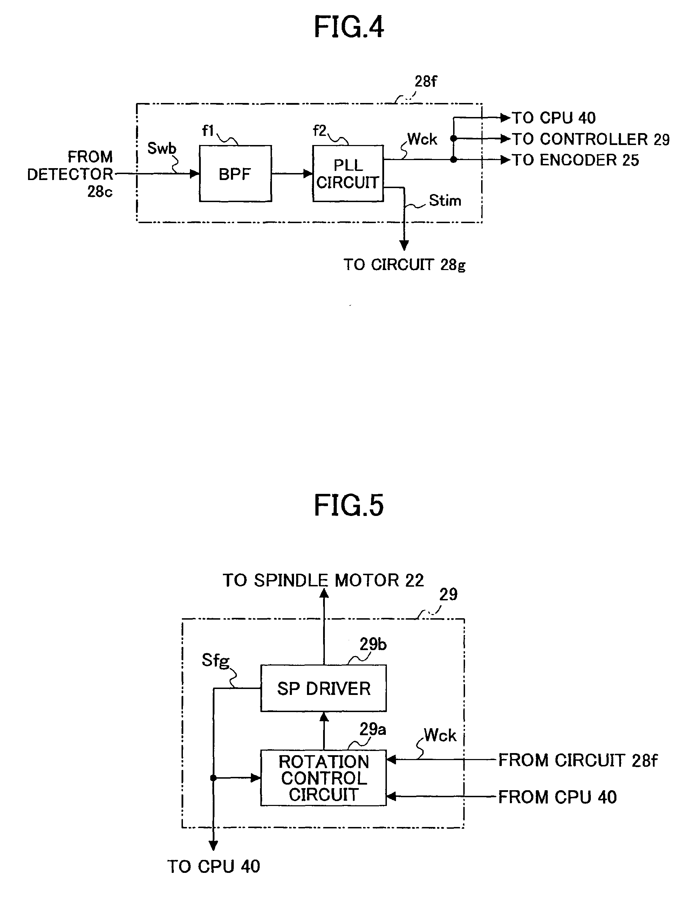

The clock signal creation circuit 28f creates the reference-clock signal (referred to as Wck) and the timing-clock signal (referred to as Stim) based on the wobble signal Swb. In the present embodiment, the clock signal creation circuit 28f comprises the BPF (band pass filter) f1 and the PLL (phase locked loop) circuit f2, as shown in FIG. 4.

The band pass filter f1 extracts the carrier components from the wobble signal Swb. Moreover, the PLL circuit f2 creates the reference-clock signal Wck and the timing-clock signal Stim which are synchronized with the output signal of the band pass filter f1.

The reference-clock signal Wck created by the PLL circuit f2 is outputted to the CPU 40, the encoder 25, and the SP controller 32, and the timing-clock signal Stim is outputted to the demodulated signal creation circuit 28g.

In addition, the period of the reference-clock signal Wck is 1/32 of the period of the wobble signal Swb. Moreover, the period of the timing-clock signal Stim is the same as that of the wobble signal Swb.

Referring back to FIG. 3, the demodulated signal creation circuit 28g carries out the phase recovery of the wobble signal Swb synchronized with the timing-clock signal Stim, and creates the demodulated signal. The demodulated signal created by the demodulated signal creation circuit 28g is outputted to the address decoder circuit 28h.

The address decoder circuit 28h decodes the address data from the demodulated signal, and outputs the signal containing the decoded address data to the CPU 40 as the address signal Sad.

Referring back to FIG. 1, the servo controller 33 creates the focusing control signal for compensating the focusing deviation based on the focusing error signal from the servo-signal detector 28b, and creates the tracking control signal for compensating the track deviation based on the tracking error signal.

Each of the control signals created is outputted to the PU driver 27 in the servo-on state, and is not outputted in the servo-off state. Servo-on and servo-off are set up by the CPU 40.

The PU driver 27 outputs the driving signal of the focusing actuator to the optical pickup device 23 based on the focusing control signal, and outputs the driving signal of the tracking actuator to the optical pickup device 23 based on the tracking control signal. That is, the tracking control and the focusing control are performed by means of the servo-signal detector 28b, the servo controller 33, and the PU driver 27.

Moreover, the PU driver 27 outputs the driving signal of the seeking motor based on the control signal from the CPU 40. The SP controller 29 controls the rotation of the spindle motor 22 based on the command sent from the CPU 40.

For example, the SP controller 29 comprises the rotation control circuit 29a and the SP driver 29b, as shown in FIG. 5. The SP driver 29b creates the driving signal which drives the spindle motor 22 based on the output (the rotation control signal mentioned later) of the rotation control circuit 29a, and outputs the driving signal to the spindle motor 22.

Moreover, the SP driver 29b creates the pulse signal of the period depending on the rotational frequency of the optical disk 15 (the FG signal Sfg), and outputs the FG signal Sfg to both the rotation control circuit 29a and the CPU 40.

The rotation control circuit 29a creates the rotation control signal for controlling the rotation of the spindle motor 22 based on the command sent from the CPU 40. The rotation control signal created by the rotation control circuit 29a is outputted to the SP driver 29b.

Moreover, the rotation control circuit 29a adjusts the rotation control signal based on the reference-clock signal Wck sent from the clock signal creation circuit 28f, and the FG signal Sfg sent from the SP driver 29b.

The flash memory 39 comprises the program area and the data area, and the program containing the recording condition setting program which sets up the recording conditions in the present embodiment and is described by the codes decipherable by the CPU 40 is stored in the program area of the flash memory 39.

Moreover, the information about the luminescence characteristics of the semiconductor laser LD, the seek information concerning the seek operation of the optical pickup device 23, the record strategy information, etc. are stored in the data area of the flash memory 39.

Next, the record strategy information will be explained. The information related to the parameter which determines the pulse form in accordance with the length nT (n= 3-14, T indicates the period of the reference-clock signal Wck (the record channel clock signal)) of the mark area which is formed on the recording surface of the optical disk is included in the record strategy information for every linear velocity.

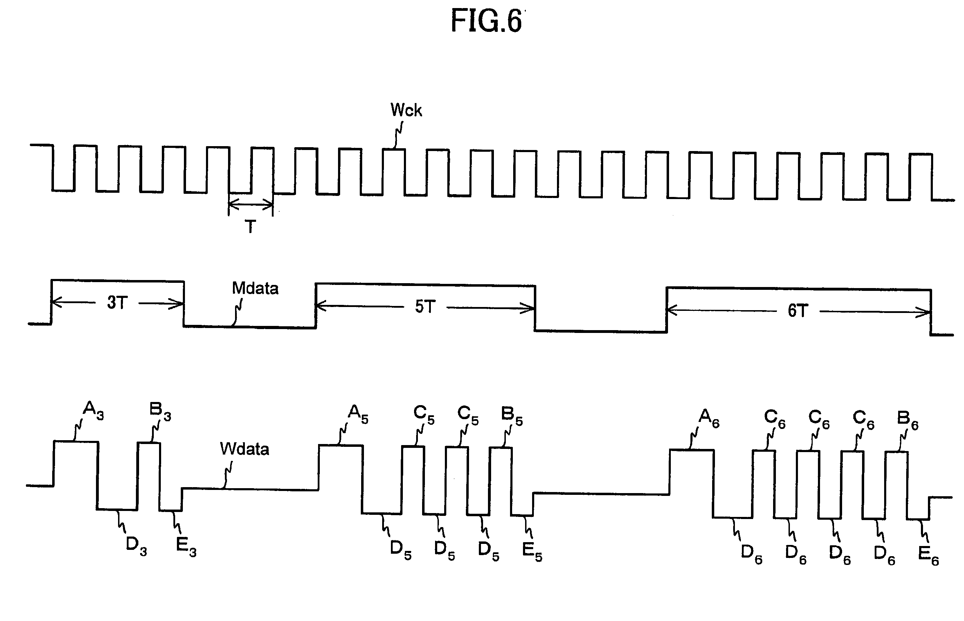

For example, as shown in FIG. 6, the pulse form in the 1T record strategy which is set with the reference pulse width T is defined by the rise timing and the fall timing (which will be called the trigger values) of each of the head heating pulse An (A3, A5 or A6 in FIG. 6), the middle heating pulse Cn (C5 or C6 FIG. 6), the last heating pulse Bn (B3, B5 or B6 in FIG. 6), the middle cooling pulse Dn (D3, D5 or D6 in FIG. 6), and the last cooling pulse En (E3, E5 or E6 in FIG. 6).

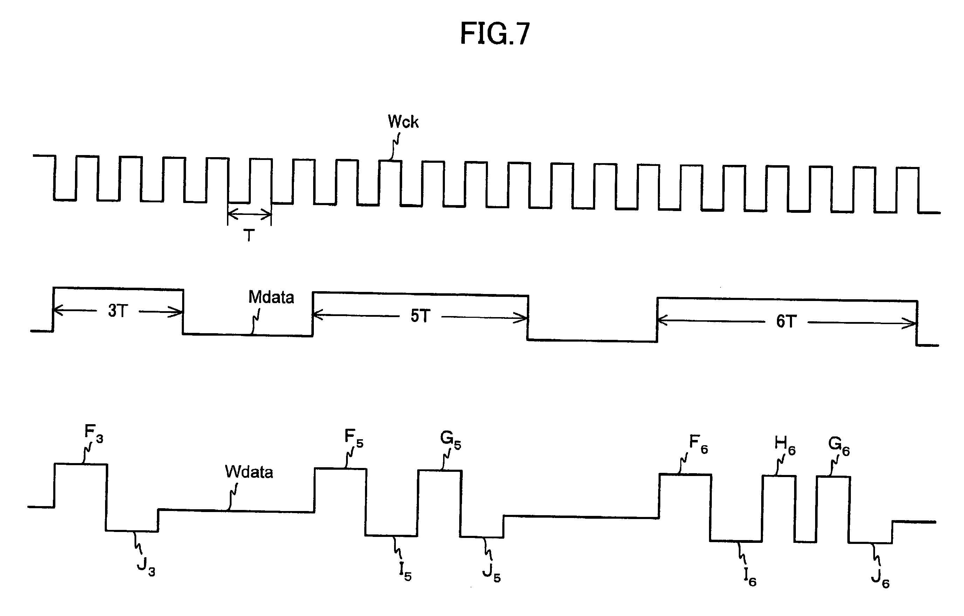

Moreover, for example, as shown in FIG. 7, the pulse form in the 2T record strategy which is set with the reference pulse width 2T is defined by each trigger value of the head heating pulse Fn (F3, F5 or F6 in FIG. 7), the middle heating pulse Hn (H6 in FIG. 7), the last heating pulse Gn (G5 or G6 in FIG. 7), the middle cooling pulse In (I5 or I6 in FIG. 7), and the last cooling pulse Jn (J3, J5 or J6 in FIG. 7).

In the following, the case of the 1T record strategy will be explained as an example.

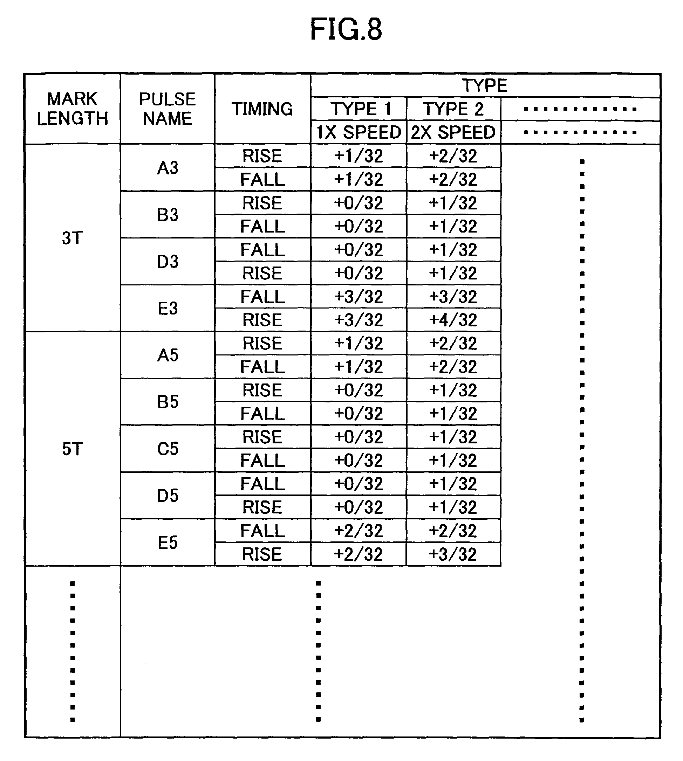

In the present embodiment, as shown in FIG. 8, the record strategy information is stored in the data area of the flash memory 39 in the table form for every type. Each type corresponds to the linear velocity respectively. Specifically, Type 1 corresponds to the 1X recording speed, and Type 2 corresponds to the 2X recording speed. Supposing that the unit period is indicated by T, the table data (the setting values) of each type is stored as the amount of change (the amount of delay or the amount of advance) of the rise timing and the fall timing to the basic pulse form. When the sign is +, the amount of delay is indicated, and when the sign is -, the amount of advance is meant.

For example, in the case in which the amount of change of the rise timing is +1/32, it means that the rise timing in the basic pulse form is delayed by (1/32)T.

In addition, when the pulse form is determined, the amount of change of the fall timing of the heating pulse and the amount of change of the fall timing of the next cooling pulse are added together, and the amount of change of the rise timing of the heating pulse and the amount of change of the rise timing of the last cooling pulse are added together.

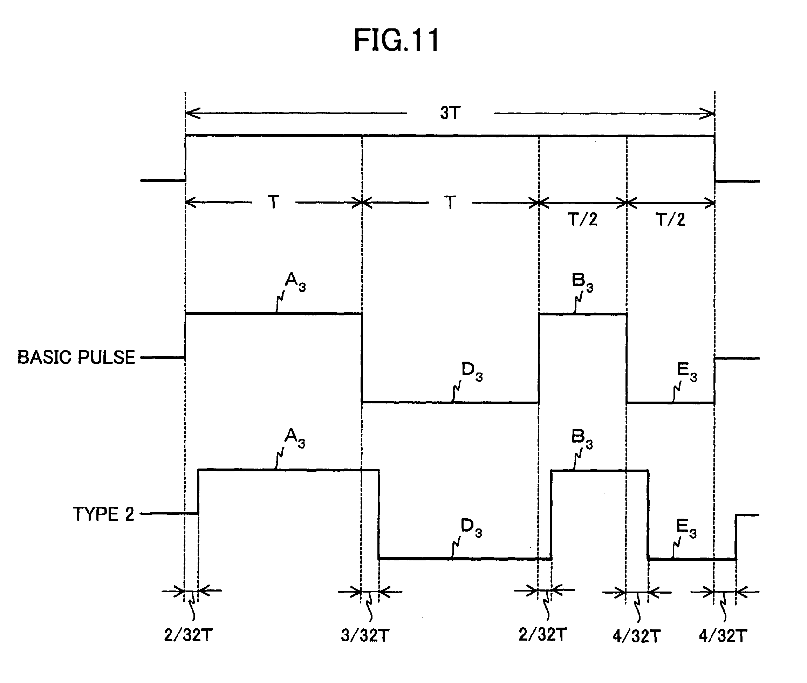

For example, in the case of the pulse form of Type 2, the amount of change of the fall timing in the head heating pulse A3 is determined by the sum (+ 3/32) which is obtained by adding the amount of change of the fall timing of the pulse A3 (+ 2/32) and the amount of change of the fall timing of the middle cooling pulse D3 (+ 1/32) together (refer to FIG. 11).

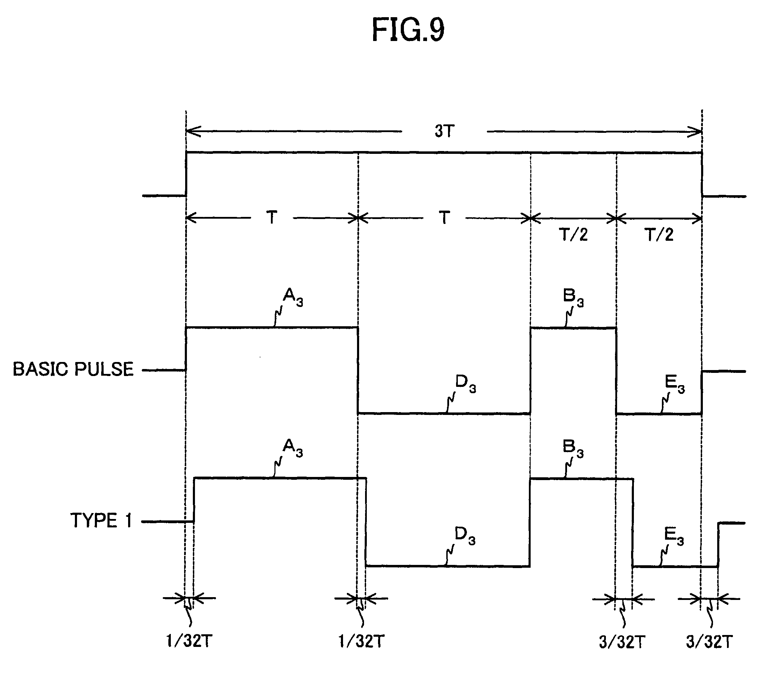

As shown in FIG. 9, the rise timing and the fall timing of the head heating pulse A3 in the pulse form of 3T of Type 1 in the present embodiment are delayed by (1/32)T, respectively, when compared to the basic pulse of 3T, and the fall timing of the last heating pulse B3 is delayed by (3/32)T, and the rise timing of the last cooling pulse E3 is delayed by (3/32) T.

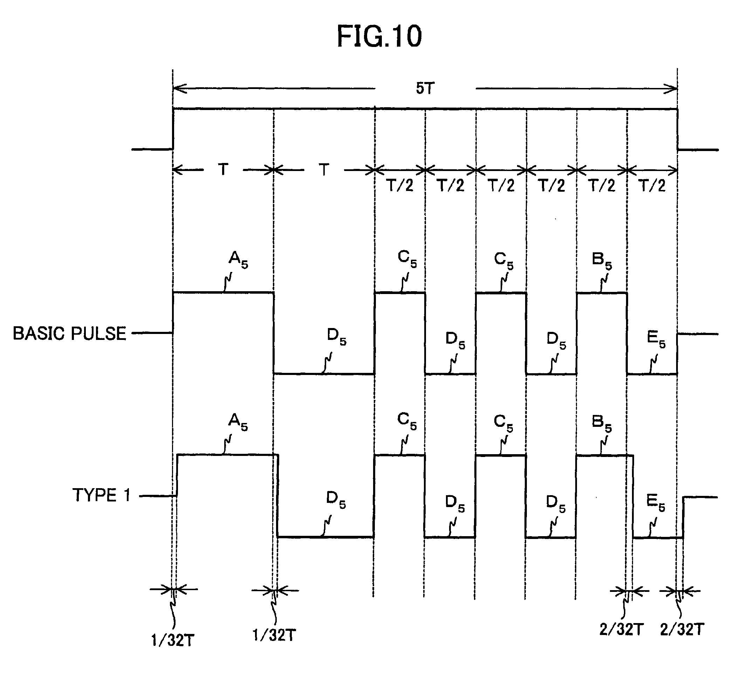

Moreover, as shown in FIG. 10, the rise timing and the fall timing of the head heating pulse A5 in the pulse form of 5T of Type 1 in the present embodiment are delayed by (1/32)T, respectively, when compared to the basic pulse of 5T, and the fall timing of the last heating pulse B5 is delayed by (2/32)T, and the rise timing of the last cooling pulse E5 is delayed by (2/32) T.

Similarly, as shown in FIG. 11, the rise timing of the head heating pulse A3 in the pulse form of 3T of Type 2 in the present embodiment is delayed by (2/32)T, when compared to the basic pulse of 3T, the fall timing thereof is delayed by (3/32)T, and the rise timing of the last heating pulse B3 is delayed by (2/32)T, the fall timing thereof is delayed by (4/32)T, and the rise timing of the last cooling pulse E3 is delayed by (4/32)T.

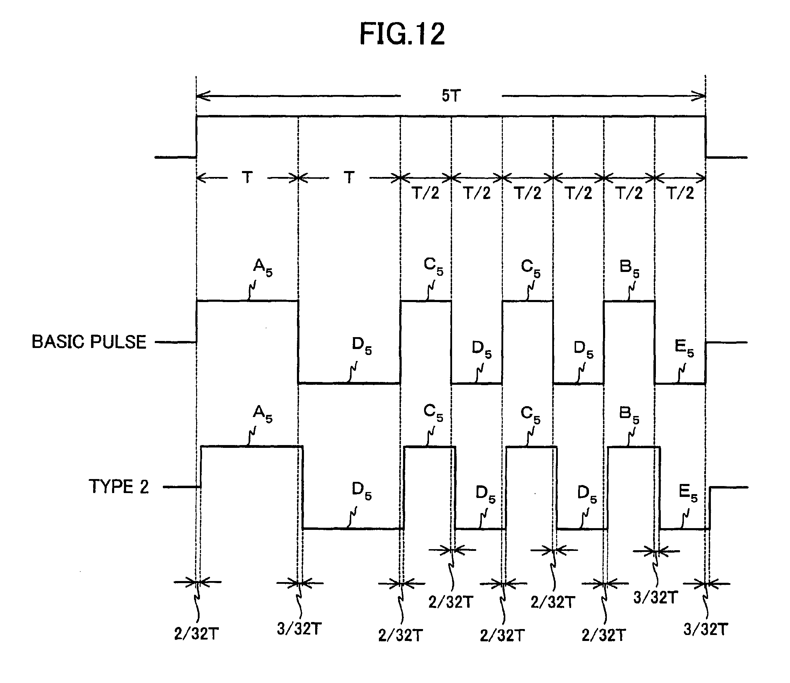

Moreover, as shown in FIG. 12, the rise timing of the head heating pulse A5 in the pulse form of 5T of Type 2 in the present embodiment is delayed by (2/32)T, when compared to the basic pulse of 5T, the fall timing thereof is delayed by (3/32)T, and the rise timing and the fall timing of the middle heating pulse C5 are delayed by (2/32)T, respectively, the rise timing of the last heating pulse B5 is delayed by (2/32)T, the fall timing thereof is delayed by (2/32)T, and the rise timing of the last cooling pulse E5 is delayed by (3/32)T.

This record strategy information is retrieved from the flash memory 39 by the CPU 40 when the recording is performed. Moreover, the record strategy information is acquired at the time of any of the manufacturing process, the adjustment process or the inspection process of the optical disk device 20, and it is stored into the data area of the flash memory 39.

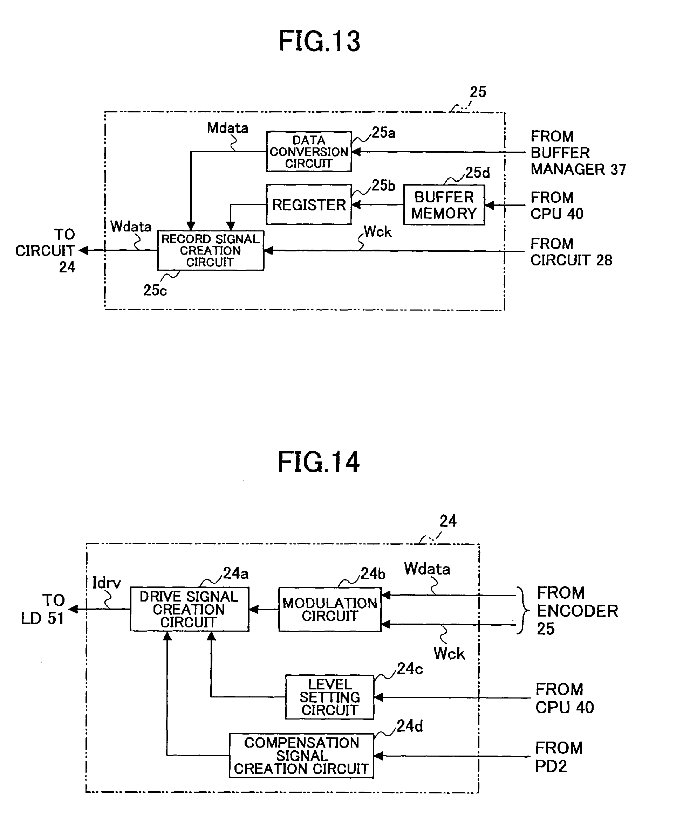

Moreover, the encoder 25 in the present embodiment comprises the data conversion circuit 25a, the register 25b, the record signal creation circuit 25c, and the buffer memory 25d, as shown in FIG. 13. In the present embodiment, the encoder 25, the read-signal processing circuit 28, the buffer manager 37, and the interface 38 are integrated into the single LSI chip.

The data conversion circuit 25a receives the recording data stored in the buffer RAM 34 through the buffer manager 37 in response to the command sent from the CPU 40, performs the data modulation, the addition of the error correction code, etc., and creates the converted record signal referred to as Mdata). The amount of change mentioned above sent from the CPU 40 is stored in the buffer memory 25d.

This buffer memory 25d has a storage capacity which is capable of storing one group of the amount of change of the rise timing and the amount of change of the fall timing. The table data of the type conforming to the linear velocity are stored in the register 25b through the buffer memory 25d.

The record signal creation circuit 25c retrieves the table data stored in the register 25b and creates the multi-pulse signal from the mark portion contained in the record signal Mdata depending on the length of the mark portion. The multi-pulse signal created by the record signal creation circuit 25 is outputted to the laser control circuit 24 as the record signal (referred to as Wdata).

The laser control circuit 24 controls the power of the laser beam which is irradiated to the optical disk 15 by the laser light source. The laser control circuit 24 in the present embodiment comprises the drive signal creation circuit 24a, the modulation circuit 24b, level setting circuit 24c, the compensation signal creation circuit 24d etc., etc., as shown in FIG. 14.

The modulation circuit 24b creates the modulated signal from the record signal Wdata from the encoder 25 on the basis of the clock signal Wck from the read-signal processing circuit 28. The modulated signal created by the modulation circuit 24b is outputted to the drive signal creation circuit 24a.

The compensation signal creation circuit 24d creates the compensation signal for compensating the change of the luminescence characteristics of the semiconductor laser LD based on the power monitor signal from the photodetector PD2. The compensation signal created by the compensation signal creation circuit 24d is outputted to the drive signal creation circuit 24a.

The level setting circuit 24c creates the level signal which contains the signal level information concerning the signal levels corresponding to the heating power, the cooling power, and the erasing power, respectively, based on the power information from the CPU 40. The level signal created is outputted to the drive signal creation circuit 24a.

The drive signal creation circuit 24a creates the drive signal Idrv for driving the semiconductor laser LD, based on the modulated signal from the modulation circuit 24b, the level signal from the level setting circuit 24c, and the compensation signal from the compensation signal creation circuit 24d.

The CPU 40 controls operation of each of the above-mentioned elements of the optical disk device in accordance with the program stored in the program area of the flash memory 39, and stores the necessary data for the control into the variable area of the RAM 41 and the buffer RAM 34.

### (Record Processing)

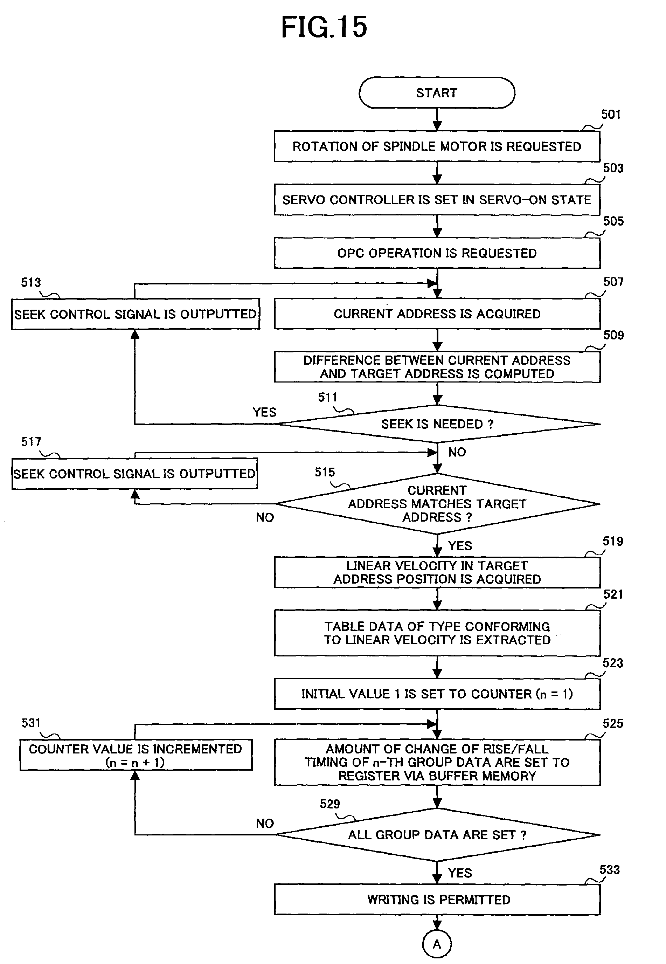

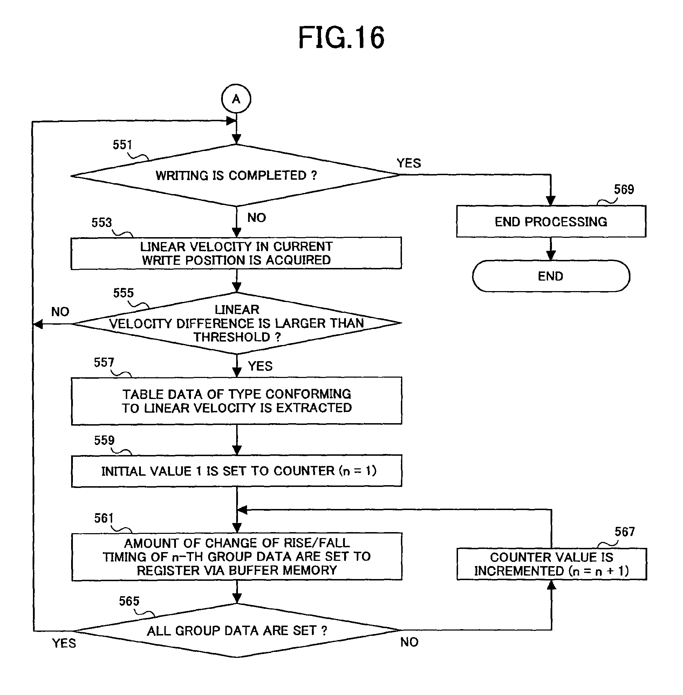

With reference to FIG. 15 and FIG. 16, the record processing which is performed by the optical disk device 20 when the record request command is received from the host computer will be explained.

The flow chart of FIG. 15 and FIG. 16 corresponds to a series of the record processing algorithm which is performed by the CPU 40 of the optical disk device 20. When the record request command is received from the host computer, the start address of the program corresponding to the flow chart of FIG. 15 and FIG. 16 is set to the program counter of the CPU 40, and the record processing is started.

At the first step 501, the CPU 40 requests the SP controller 29 to control the spindle motor 22 such that the optical disk 15 is rotated at a predetermined angular velocity. The CPU 40 notifies the read-signal processing circuit 28 that the record request command is received from the host computer. Moreover, the CPU 40 requests the buffer manager 37 to store the data (the record data) received from the host computer into the buffer RAM 34.

At the following step 503, the CPU 40 checks that the optical disk 15 is rotated at the above-mentioned angular velocity, and sets the servo controller 33 in the servo-on state. Thereby, the tracking control and the focusing control are performed as described above. In addition, the tracking control and the focusing control are performed at any time until the record processing is completed.

At the following step 505, the CPU 40 requests that the OPC (optimum power control) operation is performed, and acquires the optimal heating power. That is, in the OPC operation, the heating power is varied gradually and a set of predetermined data is written to the PCA (power calibration area) of the optical disk. After the writing is completed, the set of predetermined data is sequentially reproduced from the optical disk. In the case where the value of asymmetry detected from the RF signal substantially matches with the target value obtained beforehand by the experiments, it is determined that the case produces the highest record quality, and the heating power of the case is determined as being the optimal heating power.

At the following step 507, the current address is acquired based on the address signal Sad from the address decoder circuit 28h.

At the following step 509, the difference (address difference) between the current address and the target address extracted from the record request command is computed.

At the following step 511, it is determined whether the seek is required based on the address difference. In the present embodiment, the threshold stored in the flash memory 39 is retrieved as one of the seek information, and if the address difference is larger than the threshold, then the result at the step 511 is affirmative. The control is transferred to step 513.

At the step 513, the seek control signal to control the seeking motor according to the address difference is outputted to the PU driver 27. Thereby, the rotation of the seeking motor is driven and the seeking operation is performed. The control is transferred to the step 507.

In addition, if, at the step 511, the address difference is not larger than the threshold, then the result at the step 511 is negative. The control is transferred to step 515.

At the step 515, it is determined whether the current address matches with the target address. If the current address does not match with the target address, then the result at the step 515 is negative. The control is transferred to step 517.

At the step 517, the current address is acquired based on the address signal Sad from the address decoder circuit 28h. And the control is returned to the step 515.

In the following, the processing of the steps 515-517 is repeatedly performed until the result at the step 515 is affirmative.

If the current address matches the target address, the result at the step 515 is affirmative. The control is transferred to step 519.

At the step 519, the linear velocity in the target address position is acquired based on the reference-clock signal Wck received from the clock signal creation circuit 28f. In the present embodiment, the linear velocity is acquired by counting up the number of the pulses of the reference-clock signal Wck included within the predetermined time.

At the following step 521, the record strategy information is acquired from the data area of the flash memory 39, and the table data of the type conforming to the linear velocity obtained at the step 519 is extracted from the record strategy information.

At the following step 523, the initial value 1 is set to the counter (the count value is referred to as n) in which the number corresponding to the number of groups of the amount of change of the rise timing and the amount of change of the fall timing is retained.

At the following step 525, the amount of change of the rise timing and the amount of change of the fall timing (which are called the group data) included in the n-th group are set to the register 25b through the buffer memory 25d.

At the following step 529, the value of the counter n is checked, and it is determined whether the setting of all the group data to the register 25b is completed. When n= 1, only the first group data are set to the register 25b. The result at the step 529 is negative, and the control is transferred to step 531.

At the step 531, the count value n of the counter is incremented. The control is returned to the step 525. In the following, the processing of the steps 525-531 is repeatedly performed until the result of determination at the step 529 is affirmative.

If all the group data are set up, then the result at the step 529 is affirmative. The control is transferred to step 533.

At the following step 533, the writing is permitted to the encoder 25. Thereby, the record data is written to the optical disk 15 by means of the encoder 25, the laser control circuit 24, and the optical pickup device 23. The control is transferred to step 551 of FIG. 16.

As shown in FIG. 16, at the step 551, it is determined whether the writing is completed. If the writing is not completed, then the result at the step 551 is negative. The control is transferred to step 553.

At the step 553, the linear velocity in the present record position is acquired based on the reference-clock signal Wck.

At the following step 555, the difference between the linear velocity obtained at the step 553 and the linear velocity when the group data are set to the register 25b at the previous time is computed, and it is determined whether the difference of the linear velocity is larger than the predetermined threshold (referred to as ΔLV).

If the difference of the linear velocity is larger than the threshold ΔLV, then the result at the step 555 is affirmative. The control is transferred to step 557.

At the step 557, the record strategy information stored in the data area of the flash memory 39 is retrieved, and the table data of the type conforming to the linear velocity obtained at the step 553 are extracted.

At the following step 559, the initial value 1 is set to the counter n. At the following step 561, the n-th group data are set to the register 25b through the buffer memory 25d.

At the following step 565, the count value n of the counter is checked, and it is determined whether all the group data are set up. When n= 1, only the first group data are set up. The result at the step 565 is negative, and the control is transferred to step 567.

At the step 567, the count value n of the counter is incremented, and the control is returned to the step 561. In the following, the processing of the steps 561-567 is repeatedly performed until the result at the step 565 is affirmative. If all the group data are set up, then the result at the step 565 is affirmative. The control is returned to the step 551.

On the other hand, at the step 555, if the difference of the linear velocity is not larger than the threshold ΔLV, then the result at the step 555 is negative. The control is returned to the step 551. That is, the setting values of the register 25b are not updated at this time.

Moreover, at the step 551, if the writing is completed, then the result at the step 551 is affirmative. The control is transferred to step 569.

At the step 569, the predetermined end processing is performed. After the step 569 is completed, the record processing is terminated.

### (Reproduction Processing)

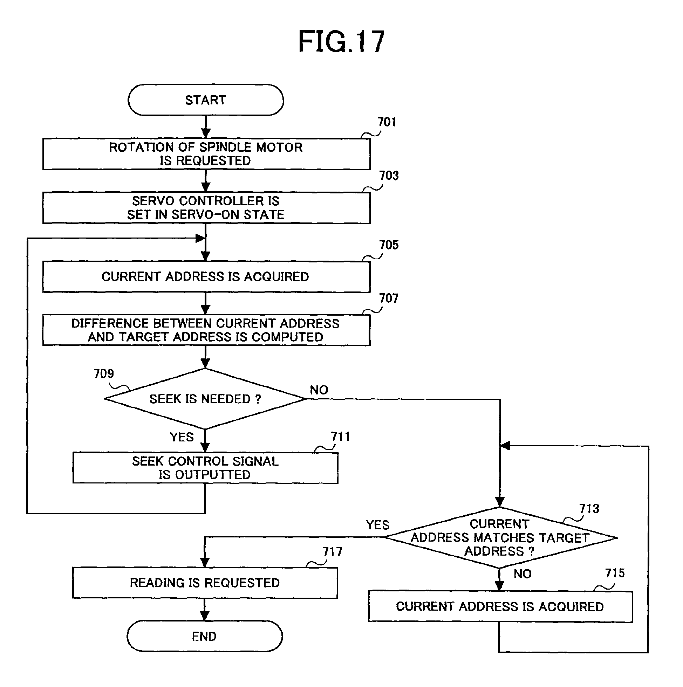

Next, with reference to FIG. 17, the reproduction processing which is performed by the optical disk device 20 when the reproduction request command is received from the host computer will be explained.

The flow chart of FIG. 17 corresponds to a series of the reproduction processing algorithm performed by the CPU 40 of the optical disk device 20. When the reproduction request command is received from the host computer, the start address of the program corresponding to the flow chart of FIG. 17 is set to the program counter of the CPU 40, and the reproduction processing is started.

At the first step 701, the CPU 40 requests the rotation control circuit 29 to control the spindle motor directing that the optical disk 15 rotates by the predetermined reproduction speed in the rotation control circuit 29, the purport that the reproduction request command was received from the host computer is notified to the read-signal processing circuit 28.

At the following step 703, a check of that the optical disk 15 rotates by the above-mentioned reproduction speed sets up servo-on to the servo controller 33. Thereby, tracking control and focusing control are performed like the above-mentioned.

In addition, tracking control and focusing control are performed at any time until reproduction processing is completed. Moreover, the address data of the track is outputted to the CPU 40 from the decoder 28e at any time based on RF signal.

At the following step 705, the current address is acquired based on the address data from the decoder 28e.

At the following step 707, the difference (address difference) of the current address and the target address extracted from the reproduction request command is computed.

At the following step 709, it judges whether the seek is required like step 511. If the seek is required, judgment will be affirmed and will shift to step 711.

At the step 711, the control signal (seek control signal) of the seeking motor depending on the address difference is outputted to the PU driver 27. The control is returned to the step 705.

On the other hand, at the step 709, if the seek is not required, the result at the step 709 is negative. The control is transferred to the step 713.

At the step 713, it is determined whether the current address matches with the target address. If the current address does not match with the target address, then the result at the step 713 is negative. The control is transferred to step 715.

At the step 715, the current address is acquired based on the address data from the decoder 28e. The control is returned to the step 713.

In the following, the processing of the step 713-715 is repeatedly performed until the result at the step 713 is affirmative. If the current address matches with the target address, the result at the step 713 is affirmative.
The control is transferred to the step 717.

At the step 717, the reading is requested to the read-signal processing circuit 28. Thereby, the reproduction data is acquired by the read-signal processing circuit 28, and the data is stored in the buffer RAM 34. This reproduction data is transmitted to the host computer through the buffer manager 37 and the interface 38 per sector.

And the reproduction processing is terminated after all the reproduction of the data specified by the host computer is completed and the predetermined end processing is performed.

In the optical disk device 20 of the present embodiment, the linear-velocity acquisition unit, the setting value determination unit, and the setting unit are realized by the program performed by the CPU 40 and this the CPU 40 so that clearly from the above explanation.

That is, in the flow chart of FIG. 15, the linear-velocity acquisition unit is realized by step 519, the setting value determination unit is realized by step 521, and the setting unit is realized by steps 523-531.

Furthermore, in the flow chart of FIG. 16, the linear-velocity acquisition unit is realized by the step 553, the setting value determination unit is realized by the step 557, and the setting unit is realized by the steps 559-567.

Moreover, the recording unit is realized by the program performed by the optical pickup device 23, the laser control circuit 24, the encoder 25, the CPU 40, and the CPU 40. However, the present invention is not limited to this embodiment.

That is, the above-mentioned embodiment may be configured to constitute a part of each unit but which is realized by the processing according to the program by the CPU 40 by the hardware, and constituting all the elements by the hardware is also possible.

Moreover, at the present embodiment, the recording condition setting program comprises by the program corresponding to processing at steps 519-531 by the flow chart of FIG. 15 among the programs stored in the program area of the flash memory 39. That is, the processing of the steps 519 and 521 corresponds to the 1st procedure, and the processing of the steps 523-531 corresponds to the 2nd procedure.

Furthermore, in the flow chart of FIG. 16, the recording condition setting program comprises the program corresponding to the processing of the steps 553-567. That is, the processing of the steps 553-557 corresponds to the 1st procedure, and the processing of the steps 559-567 corresponds to the 2nd procedure.

Furthermore, in the present embodiment, the 1st process in the recording condition setting method of the invention is carried out by the processing of the steps 519 and 521 in the flow chart of FIG. 15, and the 2nd process is carried out by the processing of the steps 523-531.

Furthermore, the 1st process in the recording condition setting method concerning the present invention is carried out by processing at steps 553-557 in the flow chart of FIG. 16, and the 2nd process is carried out by the processing of the steps 559-567.

Moreover, in the present embodiment, the recording method concerning the present invention is enforced in the above-mentioned record processing.

In the optical disk device 20 of the present embodiment, if the angular velocity is fixed and the recording to the revolving optical disk 20 is started, the linear velocity in the record position is acquired for every predetermined timing, and when the change of linear velocity is larger than the threshold ΔLV, the table data (the setting values) of the type conforming to the linear velocity is extracted from the flash memory 39.

And the extracted table data is divided into multiple times for every group data, and is outputted to buffer memory 25d.

The optimal recording conditions can always be set up by the conventional configuration, without causing the large capacity of the buffer memory 25d, the recording is increased and the number of the items relevant to the recording conditions can be increased when compared with the conventional method. That is, the large-scale LSI can be suppressed. Therefore, the recording with a good recording quality can be performed at high speed, and the enlargement of the device and the increase of the cost can be suppressed.

Moreover, in the present embodiment, the table data is divided and set to the register 25b at the multiple times, and, when compared with the case where the table data is set to the register 25b at once, the jitter can be reduced.

Therefore, the recording with a good recording quality can be performed. In addition, in the above-mentioned embodiment, when the table data corresponding to the linear velocity in the record position is not stored in the flash memory 39, with reference to each trigger value corresponding to the different linear velocity stored in the flash memory 39, predetermined operations, such as approximation computations or interpolation computations, may be performed, and the trigger value in the linear velocity in the record position may be presumed.

For example, it is possible to presume the trigger value in case linear velocity is the 1.5X from the trigger value of Type 1, and the trigger value of Type 2.

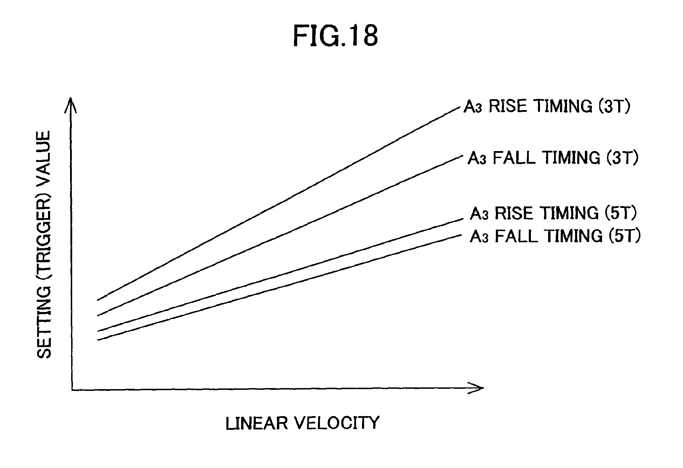

Moreover, as shown in FIG. 18, the experiments, the simulations, the theoretical calculations, etc. are performed beforehand to obtain a known relation formula representing the relation between the trigger value and the linear velocity for every mark length. And the trigger value corresponding to linear velocity may be calculated based on the known relation formula. In this case, the memory space required for the data area of the flash memory 39 can be reduced.

In addition, in FIG. 18, the case where the relation between the trigger value and the linear velocity is approximated by a linear approximation function is illustrated. It is possible to approximate the relation by the two or more dimensional approximation function, the logarithm function, etc.

Moreover, in the above-mentioned embodiment, when the difference of linear velocity is larger than the threshold ΔLV, the setting values of the register 25b are updated. Regardless of the difference of not only this but linear velocity, updating the setting values of the register 25b may be performed.

Moreover, the above-mentioned preferred embodiment explained the case where the trigger value of each pulse was stored in the flash memory 39, respectively, for every length of the mark area formed in the recording surface.

The trigger value of each pulse may be stored in the flash memory 39, respectively for every not only this but length of the space area located just behind the length of the space area located just before the mark area, or the mark area. The grade of the thermal storage is because it is related also to the length of the space area before and behind the mark area.

Moreover, the above-mentioned embodiment explained the case where it corresponded to the group data whose buffer memory 25d capacity is the 1 set. It is possible to correspond to the group data whose buffer memory 25d not only this but capacity is the plurality of sets. For example, when it corresponds to the group data whose buffer memory 25d capacity is the 3 sets, the CPU 40 will divide table data for the 3 sets of every group data, and will set it as the register 25b.

Moreover, in accordance with the capacity of the buffer memory 25d, the table data may be divided for every length of the mark area, and you may set it as register 25b.

Furthermore, in accordance with the capacity of the buffer memory 25d, the table data may be divided for every length of the space area of the front of the mark area, or the back, and you may set it as register 25b.
Moreover, by the above-mentioned preferred embodiment, the CPU 40 explained the case where divided table data for every group data, and it outputted to buffer memory 25d.

When the buffer memory 25d not only this but the capacity is not clear, it is possible to output continuously until it receives the busy signal or buffer full signal from buffer memory 25d. Moreover, in the above-mentioned embodiment, the recording condition setting program is recorded on the program area of the flash memory 39. It may be recorded on other recording mediums (CD-ROM, a magnetooptic disk, a memory card, a flexible disk, etc.). In this case, the information reproducing device corresponding to each recording medium will be added, and the recording condition setting program will be installed in the program area of the flash memory 39 from the information regenerative apparatus.

Moreover, it is possible to transmit the recording condition setting program to the program area of the flash memory 39 through the network (LAN, intranet, Internet, etc.). The recording condition setting program should just be loaded to the program area of the flash memory 39.

Moreover, in the above-mentioned embodiment, the case of the 1T record strategy has been described. The present invention is not limited to this case. Also the case of the 2T record strategy may be applicable.

Moreover, in the above-mentioned embodiment, the case where the CPU 40 acquires the linear velocity based on the reference-clock signal Wck has been described. However, in the case where the data is already recorded in the CLV recording mode, acquiring the linear velocity may be performed based on the RF signal.

Moreover, in the above-mentioned embodiment, the case where the interface 38 is in conformity with the specifications of ATAPI. The present invention is not limited to this, the interface 38 may be in conformity with the specifications of any of ATA (AT Attachment), SCSI (Small Computer System Interface), USB (Universal Serial Bus) 1.0, USB 2.0, IEEE 1394, IEEE 802.3, the serial ATA, and the serial ATAPI.

Moreover, in the above-mentioned embodiment, the case where the optical disk device is in conformity with the optical disk which is in conformity with the specifications of DVD. The present invention is not limited to this. What is necessary is just that the optical disk device is in conformity with the optical disk which is rewritable with the CAV method used. For example, the optical disk device may be in conformity with the specifications of CD-RW.

Moreover, in the above-mentioned embodiment, the optical disk device which is capable of writing the information to and reading the information from the optical disk has been described. The present invention is not limited to this. What is necessary is just that the optical disk device is capable of at least writing the information to the optical disk, from among the writing, the reading and the erasing.

Moreover, in the above-mentioned embodiment, the case where the optical pickup device is equipped with one semiconductor laser has been described. The present invention is not limited to this. The optical pickup device may be equipped with a plurality of semiconductor lasers which emit a plurality of laser beams the wavelengths of which are mutually different. In this case, the plurality of semiconductor lasers may include at least one of a semiconductor laser which emits a laser beam whose wavelength is bout 405 nm, a semiconductor laser which emits a laser beam whose wavelength is about 660 nm, and a semiconductor laser which emits a laser beam whose wavelength is about 780 nm.

That is, the optical disk device of the present invention may be an optical disk device which is in conformity with any of the plurality of optical disks based on the specifications which are mutually different. What is necessary is just that at least one of such optical disks based on the different specifications is the rewritable optical disk which is rewritable using the CAV method.

## Claims

1. A recording condition setting method of setting record timing conditions of an optical disk device when a laser beam pulse is created and information is recorded on a recording surface of an optical disk rotated by a constant angular velocity, the recording condition setting method comprising the steps of:
acquiring a plurality of setting values of the record timing conditions for a number of group data conforming to a linear velocity of the optical disk at a record position on the recording surface where the information is recorded; and
setting the plurality of setting values for the number of group data to the optical disk device one by one at the number of times.

2. The recording condition setting method according to claim 1 wherein the number of group data include parameters which specify a configuration of the laser beam pulse.

3. The recording condition setting method according to claim 2 wherein the parameters contain any of a pulse width of the laser beam pulse, a rise timing of the laser beam pulse, and a fall timing of the laser beam pulse.

4. The recording condition setting method according to claim 3 wherein the parameters contain the rise timing of the pulse and the fall timing of the pulse, and the setting step is configured so that the plurality of setting values for the number of group data are respectively set one by one with respect to each of the number of group data containing the rise timing and the fall timing.

5. The recording condition setting method according to claim 1 wherein the acquiring step is configured so that a plurality of values each depending on a length of a mark area to be formed on the recording surface are acquired with respect to each of the number of group data, respectively.

6. The recording condition setting method according to claim 5 wherein the setting step is configured so that each of the plurality of values for the number of group data is set to the optical disk device one by one with respect to each of a plurality of lengths of mark areas.

7. The recording condition setting method according to claim 1 wherein the acquiring step is configured so that either a plurality of values each depending on a length of a space area immediately preceding a mark area to be formed on the recording surface or a plurality of values each depending on a length of a space area immediately following the mark area are acquired with respect to each of the number of group data, respectively.

8. The recording condition setting method according to claim 7 wherein the setting step is configured so that each of the plurality of values for the number of group data is set to the optical disk device one by one with respect to each of a plurality of lengths of space areas.

9. The recording condition setting method according to claim 1 wherein the acquiring step is configured so that at least one of the plurality of setting values for the number of group data is acquired based on a known relation formula which represents a relation between the linear velocity and the setting value.

10. The recording condition setting method according to claim 1 wherein the acquiring step is configured so that at least one of the plurality of setting values for the number of group data is acquired from results of predetermined operations performed based on a plurality of sets of a known linear velocity and a known setting value.

11. The recording condition setting method according to claim 10 wherein the predetermined operations are either approximation computations or interpolation computations.

12. A recording method of recording information on a recording surface of an optical disk rotated by a constant angular velocity, by creating a laser beam pulse and using record timing conditions of an optical disk device, the recording method comprising the step of recording the information on the optical disk using the record timing conditions set up by the recording condition setting method according to claim 1.

13. A computer-readable recording medium embodied therein for causing a computer of an optical disk device to execute a recording condition setting method, wherein the optical disk device records information on a recording surface of an optical disk rotated by a constant angular velocity, and the recording condition setting method sets record timing conditions of the optical disk device when a laser beam pulse is created and the information is recorded on the optical disk, the recording condition setting method comprising the steps of:
acquiring a plurality of setting values of the record timing conditions for a number of group data conforming to a linear velocity of the optical disk at a record position on the recording surface where the information is recorded; and
setting the plurality of setting values for the number of group data to the optical disk device one by one at the number of times.

14. An optical disk device which records information on an optical disk, the optical disk device comprising :
a linear-velocity acquiring unit acquiring a linear velocity of the optical disk at a record position on a recording surface of the optical disk which is rotated by a constant angular velocity;
a setting-value acquiring unit acquiring a plurality of setting values of record timing conditions for a number of group data, respectively, by retrieving one of a plurality of setting values, which are obtained beforehand for every linear velocity for the number of group data, based on the linear velocity acquired by the linear-velocity acquisition unit;
a setting unit setting the plurality of setting values for the number of group data to the optical disk device one by one at the number of times; and
a recording unit recording the information on the optical disk using each of the plurality of setting values set by the setting unit.

15. The optical disk device according to claim 14 wherein the optical disk is a rewritable optical disk.

16. The optical disk device according to claim 15 wherein the rewritable optical disk is in conformity with any of specifications of CD-RW, DVD-RW and DVD+RW.
